# EUROPEAN PATENT APPLICATION

(11) **EP 4 769 435 A1**
(43) Date of publication of application: **01.07.2026**
(21) Application number: 25225986.6
(22) Date of filing: 19.12.2025
(51) Int. Cl.: G21C 5/06, G21C 19/19, G21C 1/03, G21C 1/14

(54) **NUCLEAR REACTOR WITH MODULAR GRID**

(30) Priority: 24.12.2024 IT 202400029940
(71) Applicant: Ansaldo Nucleare S.p.A., 16152 Genova (IT)
(72) Inventor: FRIGNANI, Michele, 16152 GENOVA (IT); MANTERO, Marco, 16152 GENOVA (IT)
(74) Representative: Studio Torta S.p.A.

(57) **Abstract**

A nuclear reactor includes a vessel (2) internally defining a pool (3), a cooling fluid (CF), and a core (6) housed in the vessel (2) and having a plurality of fuel elements (8) extending along respective longitudinal axes (A). A grid (10) anchored to the vessel (2) is arranged transversely to the longitudinal axes (A) of the fuel elements (8), so as to axially restrain the fuel elements (8). The grid (10) includes a plurality of individually removable modular grid components (13). In a working position, adjacent modular grid components (13) are reversibly locked to one another so as to prevent relative mutual axial sliding. The modular grid components (13) are shaped so that, when one of the modular grid components (13) is removed from the grid (10), the grid (10) allows the extraction of a corresponding fuel element (8) through a passage left open by the removed modular grid component (13).

## Description

### Cross-reference to related applications

This patent application claims priority from Italian patent application no. 102024000029940 filed on December 24, 2024, the entire disclosure of which is incorporated herein by reference.

### Technical field

The present invention relates to a nuclear reactor with a modular grid.

### Background

As is known, in nuclear reactors it is important to maintain the correct positioning of the fuel elements forming the core to ensure desired performance and safety levels. A measure often adopted involves the use of a grid anchored to the casing or vessel of the nuclear reactor to restrain the upper ends of the fuel elements, preventing relative movements, both axial and radial. The role of the grid is particularly important in nuclear reactors that use heavy liquid metals, for example liquid lead, to cool the core. In this case, in fact, the cooling fluid, in addition to causing fluid-induced vibrations and a drag force in the direction of the velocity, also provides a strong buoyancy force to the fuel elements, which tend to rise. In nuclear reactors of this type, the grid therefore has the task of counteracting the buoyancy force caused by the cooling fluid.

Regardless of the cooling fluid used, the stabilization of the fuel elements by known grids, however, suffers from significant limitations and may cause problems in certain circumstances. In particular, for maintenance requirements, it is necessary to intervene on the fuel elements periodically and in a predetermined order, for example to redistribute or replace the partially or fully spent fuel elements. For this purpose, the fuel elements must be extracted from the core. To allow the extraction of the fuel elements, the grid must however be removed, but the removal of the grid reduces the stability of the fuel elements, which may be subject to displacements. For example, when one of the fuel elements is extracted, the remaining fuel elements normally tend to take up the radial plays. In such conditions, a so-called local "flowering" condition may occur, which could lead to the accidental withdrawal of one or more fuel elements and which persists until the grid is repositioned in place.

The temporary removal of the grid is even more critical in reactors cooled with heavy liquid metals, since the fuel elements are also subject to the buoyancy force of the cooling fluid and therefore the risk of accidental extraction is even greater than for local "flowering" alone.

Whatever the cooling fluid used, the fuel elements must therefore be held in position otherwise, fully or partially immersed in the cooling fluid. The operation, which is generally performed using dedicated machinery, is however complex and not without risks.

### Summary

It is therefore an object of the present invention to provide a nuclear reactor that allows to overcome or at least mitigate the described limitations.

According to an aspect of the present invention, there is provided a nuclear reactor comprising:
a vessel internally defining a pool;
a cooling fluid in the pool;
a core housed in the vessel and comprising a plurality of fuel elements at least partially immersed in the cooling fluid, wherein each fuel element extends along a respective longitudinal axis;
a grid anchored to the vessel and arranged transversely to the longitudinal axes of the fuel elements, so as to axially restrain the fuel elements;
wherein the grid comprises a plurality of individually removable modular grid components, wherein, in a working position, adjacent modular grid components are reversibly locked to one another so as to prevent relative mutual sliding in a direction parallel to the longitudinal axes of the fuel elements and wherein the modular grid components are shaped so that, when one of the modular grid components is removed from the grid, the grid allows the extraction of a corresponding fuel element through a passage left open by the removed modular grid component.

The grid according to the invention is of a modular design and is constructed so that a single modular grid component may be individually removed to allow the extraction of the corresponding fuel element while keeping the others constrained in the correct working position. The reversible coupling between adjacent modular grid components may be released so as to free a single modular grid component at a time, leaving the others axially constrained as in the normal working configuration, in which the grid is complete. The operation of extracting the fuel elements is therefore greatly simplified and may be performed safely and at significantly lower costs.

The modular design also allows a single modular grid component to be replaced in case of damage. The moving parts used to implement the reversible axial constraint between adjacent modular grid components may be subject to severe operating conditions in the circulating cooling fluid, especially when a heavy liquid metal is used, in an environment subject to radiation fields, such as to require periodic monitoring and possible subsequent replacement. The grid according to the invention allows only the damaged modular grid component to be replaced, with neither intervening on the corresponding fuel element, nor on the other fuel elements, which remain in the usual and correct operating configuration, nor on the other modular grid components. The repair of the grid is therefore advantageous both in terms of simplicity of execution and in terms of costs.

According to an aspect of the invention, each modular grid component is axially aligned with the corresponding fuel element, so as to counteract a buoyancy and/or drag force provided by the cooling fluid to the corresponding fuel element.

In this way, the grid ensures that only the fuel elements corresponding to removed modular grid components can actually be extracted, while all the others are held in the correct operating position by the modular grid components remaining in place.

According to an aspect of the invention, each modular grid component is provided with locking seats and reversible locking members having respective locking positions, in which the locking members engage corresponding locking seats of respective adjacent modular grid components, and respective retracted positions, in which the locking members are retracted from the respective locking seats.

In practice, therefore, the reversible locking members of a modular grid component engage the locking seat of an adjacent modular grid component, preventing relative axial sliding and keeping the fuel elements in the correct working configuration.

According to an aspect of the invention, each modular grid component comprises a body having a cylindrical or prismatic side wall coaxial with the corresponding fuel element, wherein the side wall has first slots, defining respective locking seats, and second slots, and wherein the locking members engage the corresponding locking seats through respective second slots in the respective locking positions.

According to an aspect of the invention, the locking seats of each modular grid component face corresponding second slots of respective adjacent modular grid components.

According to an aspect of the invention, all the modular grid components comprise an equal number of locking members and locking seats and in each modular grid component the respective locking members are alternated with the respective locking seats along the side wall of the body.

The measures contribute individually and in combination to the simple and compact construction of the grid according to the invention, while at the same time ensuring that no appreciable axial sliding occurs.

According to an aspect of the invention, the locking members comprise tabs movable between the respective locking position, in which they are arranged with respective locking ends engaging the respective locking seats, and the respective retracted position, in which the locking ends are retracted inside the body.

The movable tabs are particularly compact and simple to operate, as well as to construct. The mechanism that actuates the reversible locking therefore occupies a small space, is reliable and hardly subject to malfunctions.

According to an aspect of the invention, each modular grid component comprises actuation members operable to move the locking members between the respective locking position and the respective retracted position.

According to an aspect of the invention, in each modular grid component the actuation members are operable independently of one another.

The independent operation of the actuation members allows to release only the constraints strictly necessary for the extraction of a modular grid component and the corresponding fuel element, leaving all other constraints unaltered, to the benefit of robustness and stability.

According to an aspect of the invention, the body comprises a cover having a respective guide opening for each locking member and the actuation members comprise respective actuation rods passing through respective guide openings and projecting from the cover.

According to an aspect of the invention, in each modular grid component the respective locking members are simultaneously operable.

The advantages of simultaneous operation lie essentially in the greater simplicity, speed and reliability of operation, also in view of the hostile environment in which the grid is immersed. In practice, only one external actuator is required to operate the locking members and the time during which the actuator remains immersed in the cooling fluid is reduced, which is particularly advantageous when a liquid metal is used.

According to an aspect of the invention, each modular grid component comprises a shaft coaxial with the corresponding fuel element and wherein the actuation members comprise respective toothed portions of the locking members and a ring gear, which is rotatably fitted on the shaft and engages with the toothed portions of the locking members.

The actuation members thus realised are particularly simple and robust.

According to an aspect of the invention, each modular grid component comprises a safety device configured to allow the rotation of the ring gear about the shaft in an operating configuration and to prevent the rotation of the ring gear about the shaft in a safety configuration.

The safety device prevents the locking members from accidentally moving from their respective locking positions and therefore the risk of one of the fuel elements being released by mistake without adequate protection.

According to an aspect of the invention, the safety device comprises a safety ring nut fitted on the shaft in an angularly fixed manner and cooperating with an axial margin of the ring gear to form a releasable front coupling and wherein one of the ring gear and the safety ring nut is axially fixed and the other of the ring gear and the safety ring nut is axially slidable along the shaft between an operating position, in which the front coupling is released and the ring gear is free to rotate, and a safety position, in which the ring gear is coupled to the safety ring nut and the front coupling prevents the rotation of the ring gear.

According to an aspect of the invention, the ring gear engages with the toothed portions of the respective locking members both in the operating position and in the safety position.

According to an aspect of the invention, the axially fixed one of the ring gear and the safety ring nut is arranged at the top and, in the absence of external forces, the ring gear and the safety ring nut are kept coupled by the buoyancy force provided by the cooling fluid.

According to an aspect of the invention, the axially fixed one of the ring gear and the safety ring nut is arranged at the bottom and, in the absence of external forces, the ring gear and the safety ring nut are kept coupled by gravity.

The safety device thus realised is particularly simple and reliable. In practice, when the cooling fluid comprises heavy liquid metals, the axially fixed element of the safety device can be arranged at the top and the buoyancy force provided by the cooling fluid itself tends to spontaneously maintain the front coupling between the ring gear and the safety ring nut, preventing the ring gear from rotating. When instead the cooling fluid comprises water or molten salts, the axially fixed element of the safety device can be arranged at the bottom and the front coupling is maintained by gravity. In either case, no members or mechanisms are required to restore the coupling between the ring gear and the safety ring nut once the operation is completed.

### Brief description of the drawings

For a better understanding of the present invention, some preferred embodiments are presented, by way of non-limiting example, with reference to the accompanying drawings, in which:
- figure 1 is a schematic view of a nuclear reactor;
- figure 2 is a simplified and enlarged top plan view of components of the nuclear reactor of figure 1;
- figure 3 is an enlarged perspective view of a detail of the components of figure 2, according to an embodiment of the present invention, with parts cut away for clarity;
- figure 4 is a side view, sectioned along the trace plane IV-IV of figure 2, of the detail of figure 3;
- figure 5 is a perspective view, sectioned along the trace plane IV-IV of figure 2, of the detail of figure 3;
- figure 6 is a top plan view of the detail of figure 3 in a first configuration, with parts cut away for clarity;
- figure 7 is a top plan view of the detail of figure 3 in a second configuration, with parts cut away for clarity;
- figure 8 is an enlarged perspective view of a detail of the components of figure 2, according to a different embodiment of the present invention, with parts cut away for clarity;
- figure 9 is a top plan view of the detail of figure 8, with parts cut away for clarity;
- figures 10 and 11 show side views of a detail of figure 8, respectively in a first operating configuration and in a second operating configuration;
- figures 12 and 13 show side views of a detail of the components of figure 2 according to a different embodiment of the present invention, respectively in a first operating configuration and in a second operating configuration;
- figures 14 and 15 show side views of a detail of the components of figure 2 according to another embodiment of the present invention, respectively in a first operating configuration and in a second operating configuration; and
- figures 16 and 17 show side views of a detail of the components of figure 2 according to a further embodiment of the present invention, respectively in a first operating configuration and in a second operating configuration.

### Description of embodiments

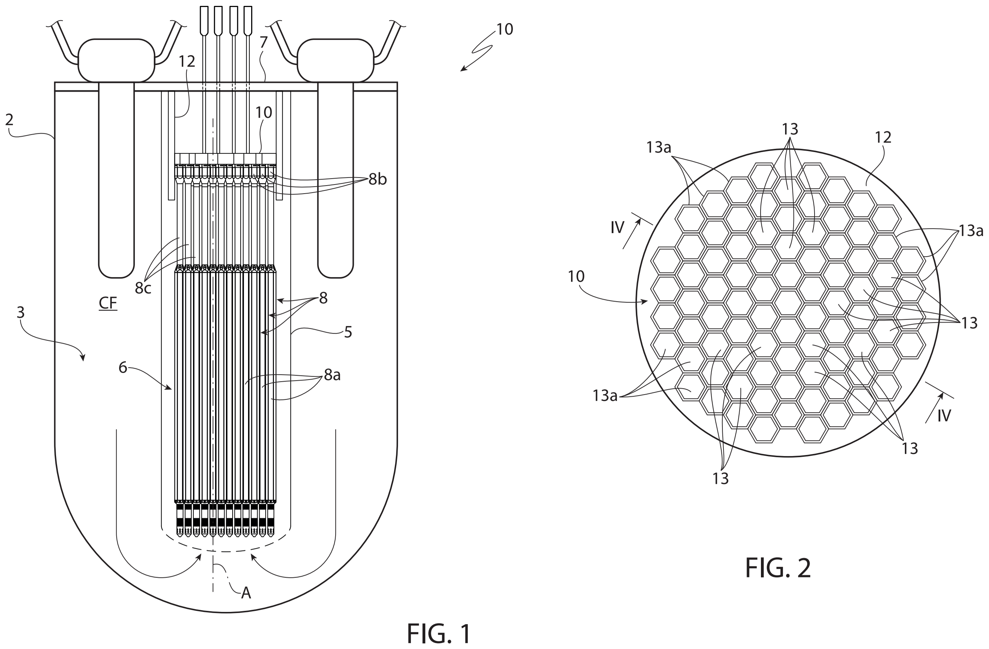

With reference to figure 1, a nuclear reactor according to an embodiment of the present invention is indicated by number 1 and comprises a vessel 2 internally defining a pool 3, an internal separation structure 5 open at the bottom and a core 6 contained within the internal separation structure 5. The vessel 2 is further provided with a closure element 7 at the top. A cooling fluid CF, for example a heavy liquid metal, for example and without limitation liquid lead, bismuth or a lead-bismuth eutectic alloy, is contained in the pool 3 and circulates in the internal separation structure 5 through the core 6 on account of circulation pumps not shown or by natural circulation. It is understood, however, that the invention can also be used in reactors cooled with different fluids, for example molten salts or water.

The core 6 is housed in the vessel 2, more specifically within the internal separation structure 5, and comprises a plurality of fuel elements 8 at least partially immersed in the cooling fluid CF. Each fuel element 8 extends along a respective longitudinal axis A arranged in use substantially vertically and has an active portion 8a, corresponding to the zone where the fuel resides, a head 8b, in the upper position, a stem 8c, defined by a structural extension of the element itself of the same or a different shape and connecting the head 8b to the active portion 8a and a foot 8d defined by a sufficiently rigid part in the lower portion of the element. In the illustrated embodiment, the fuel elements 8 have a hexagonal cross-section perpendicularly to the respective longitudinal axes A, but they could have a different shape according to design preferences, for example square or circular.

The nuclear reactor 1 further comprises a grid 10 anchored to the vessel 2 and arranged transversely to the longitudinal axes A of the fuel elements 8. In a non-limiting embodiment, the grid 10 has a honeycomb shape, as shown in the plan view of figure 2. The grid 10 may for example be fixed to an anchoring structure 12 of the closure element 7, which in turn is rigidly connected to the vessel 2. Alternatively, the grid 10 can be fixed directly to the internal separation structure 5. The grid 10 counteracts the buoyancy and drag force provided by the cooling fluid CF, which is particularly intense in the case of liquid metals, and axially restrains the fuel elements 8, also limiting the vibrations induced by the cooling fluid CF in the radial direction

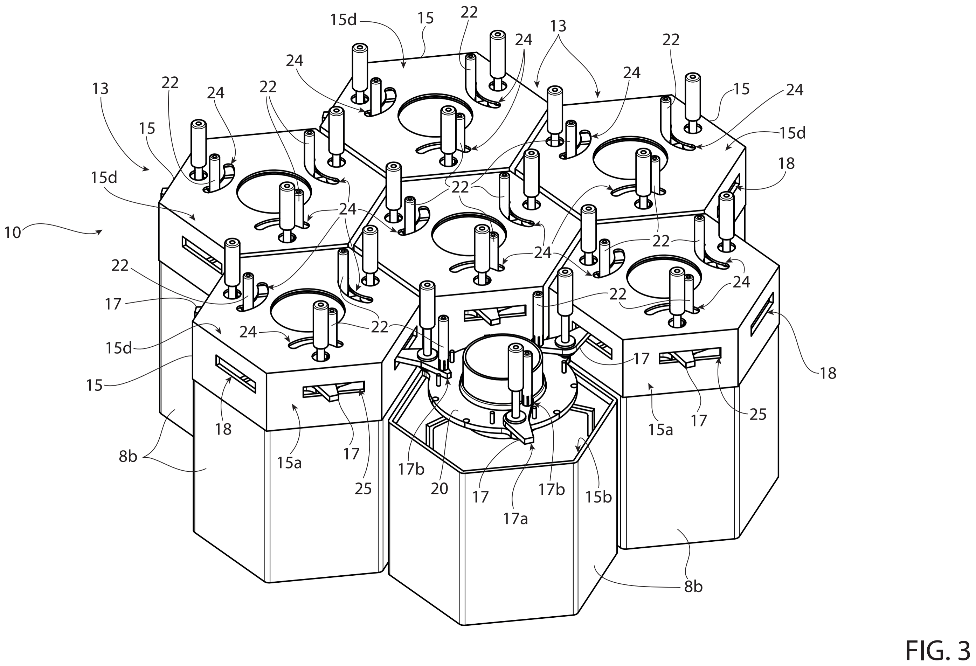

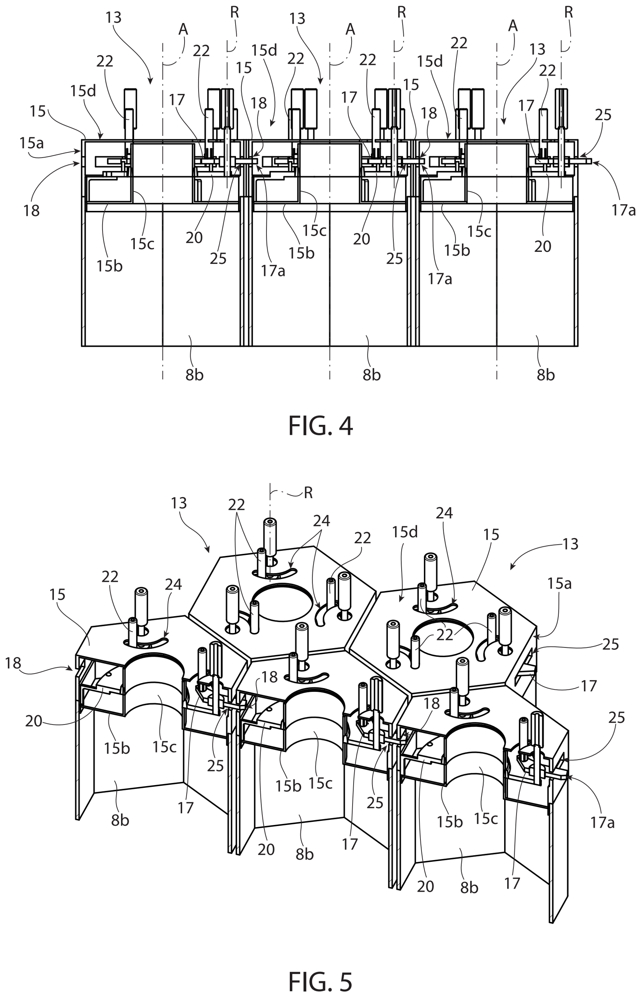

With reference to figures 3-7, the grid 10 comprises a plurality of modular grid components 13 which, in a working position, are arranged coaxially with respective fuel elements 8. The modular grid components 13 are individually removable and, in a working position, adjacent modular grid components 13 are reversibly locked to one another so as to prevent relative mutual sliding in a vertical direction. Outer modular grid components 13a are fixed to the anchoring structure 12 and, through the latter, to the vessel 2.

Furthermore, the modular grid components 13 are axially aligned with the heads 8b of the respective fuel elements 8 and are shaped so as to axially restrain the respective fuel element 8 against upward axial forces (buoyancy and drag force due to the cooling fluid CF) and so that, when one of the modular grid components 13 is removed from the grid 10, the grid 10 allows the extraction of the corresponding fuel element 8 through a passage left open by the removed modular grid component.

More specifically, each modular grid component 13 comprises a body 15 having a side wall 15a conforming to the cross-section of the fuel elements 8 (in this case a prism with a hexagonal base), so that the heads 8b of the fuel elements 8 remain in abutment against the body 15 of the respective modular grid component 13 due to the buoyancy force provided by the cooling fluid CF.

Each modular grid component 13 is also provided with reversible locking members, which in the non-limiting embodiment described herein are defined by rotating tabs 17, and locking seats 18. Alternatively, the reversible locking members could comprise sliding tabs or pins, other types of cams or eccentrics and, in general, any device suitable for preventing relative sliding between two bodies along an axis.

The tabs 17 are rotatably supported by a plate 20 around respective axes of rotation R parallel to the longitudinal axes A of the fuel elements and therefore substantially vertical. The plate 20 is fixed to the body 15, for example to the side wall 15a and/or to a base 15b of the respective body 15. The plate 20 is also bored and is fitted on a shaft 15c of the body 15 coaxially with the respective fuel element 8. In the non-limiting embodiment described herein, the shaft 15c allows the circulation of the cooling fluid through the respective modular grid component 13. In other embodiments, however, the shaft may be solid and the circulation of the cooling fluid may be provided by other fluid passages through the body 15.

In the embodiment of figures 3-7, each tab 17 has a locking end 17a and an actuation end 17b angled relative to one another and is provided at the actuation end 17b with an actuation member. Here, in particular, the actuation member is defined by an actuation rod 22 perpendicular to the respective axis of rotation R. Furthermore, the body 15 comprises a cover 15d having a respective circular guide opening 24 for each tab 17. The actuation rods 22 of the tabs 17 pass through respective guide openings 24 and project upwards from the cover 15d to be operated by an external actuator, for example incorporated in a service machine not shown here. As a result of the rotation of the tabs 17 around their respective axes of rotation, the locking ends 17a can exit through the side wall 15a of the body 15, which for this purpose is provided with slots 25 extending along a plane perpendicular to the axes of rotation of the tabs 17.

The locking seats 18 are defined by slots in the side wall 15a of the body 15 in positions corresponding to tabs 17 of the adjacent modular grid components 13. The slots defining the locking seats 18 face respective slots 25 and are coplanar therewith. In the embodiment of figures 3-7, in particular, in each modular grid component 13 the locking seats 18 and the slots 25 are on alternate faces of the side wall 15a, so that each locking seat 18 of a modular grid component 13 is faced by a corresponding slot 25 of one of the adjacent modular grid components 13. All the modular grid components 13 comprise an equal number of tabs 17 and locking seats 18 and in each modular grid component 13 the respective tabs 17 are alternated with the respective locking seats 18 along the side wall 15a of the body 15.

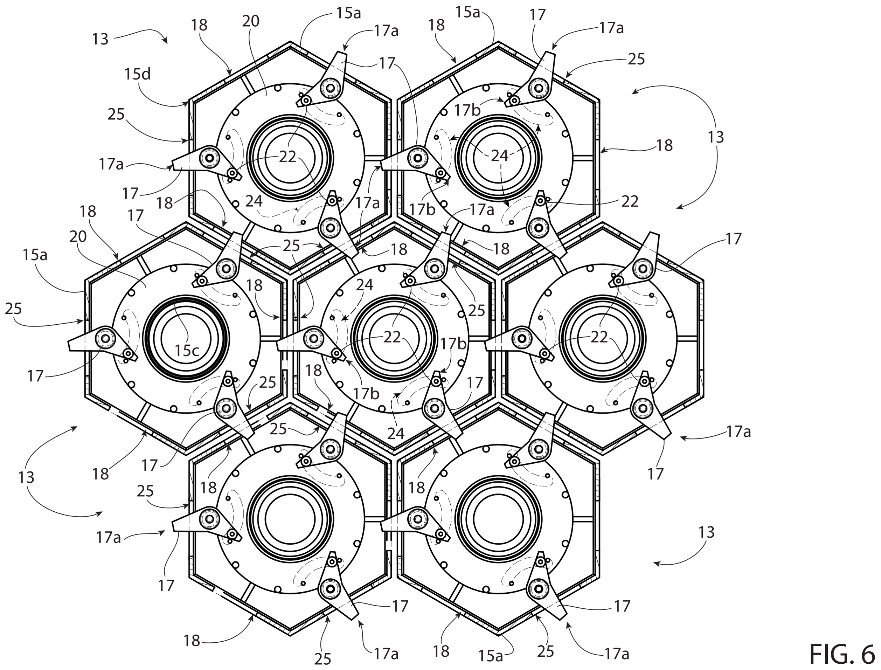

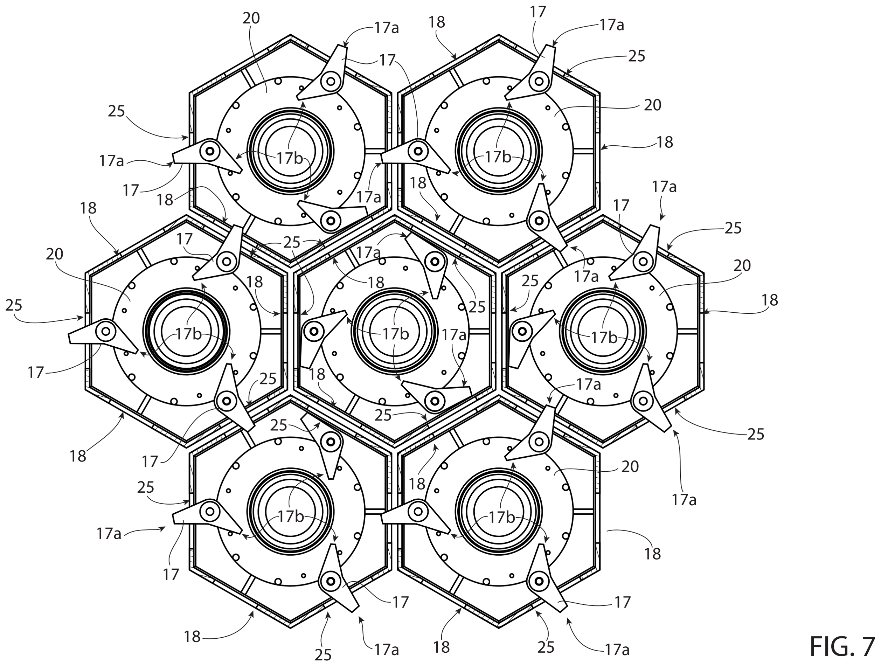

The tabs 17 are rotatable between respective locking positions and respective retracted positions. In the locking positions (figure 6), the tabs 17 engage corresponding locking seats 18 of respective adjacent modular grid components 13 with the locking ends 17a, which extend through respective slots 25. In this configuration, the modular grid components 13 are axially constrained to one another by the mutual engagement of the tabs 17 and locking seats 18, and relative axial sliding is prevented. In the retracted positions (central modular grid component 13 in figure 7), the tabs 17 are retracted from the respective locking seats 18 and are arranged entirely inside the body 15, or in any case so as not to interfere with the relative axial sliding with respect to the adjacent modular grid components 13.

In the embodiment of figures 3-7, the actuation rods 22 of the tabs 17 are operable independently of one another to move the tabs 17 themselves between the respective locking positions and the respective retracted positions.

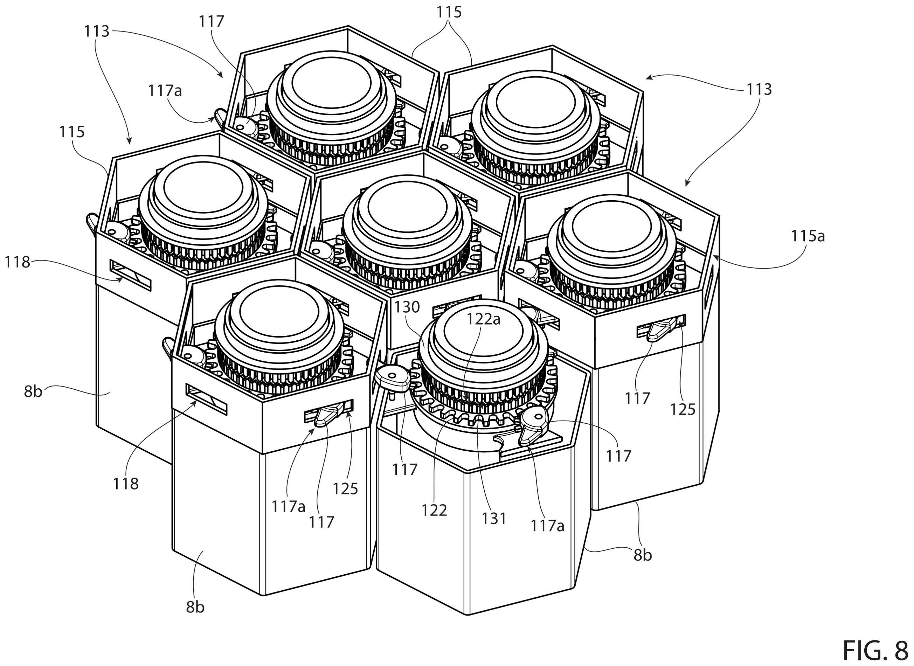

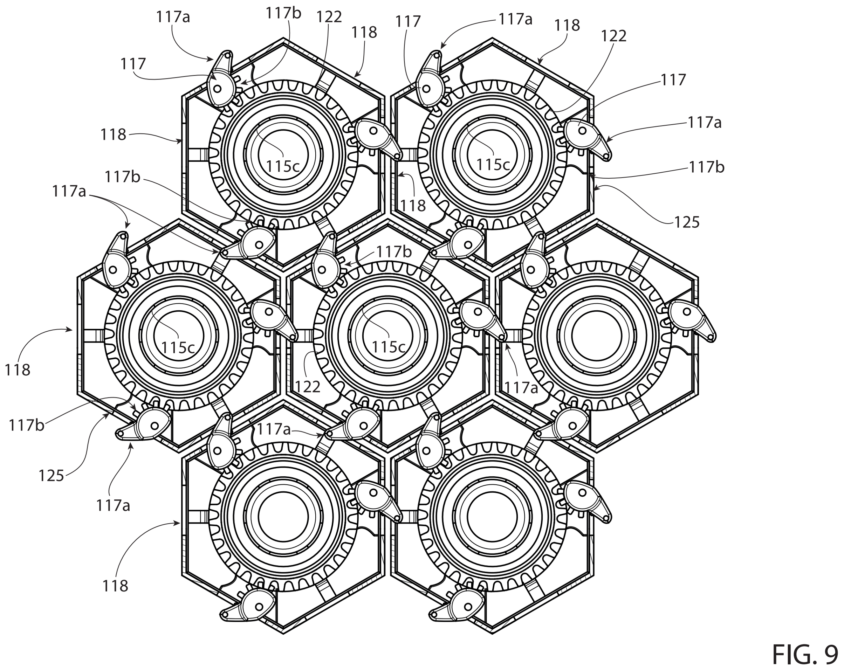

Figures 8 and 9, in which parts corresponding to those already shown are indicated with the same reference numerals, illustrate a different embodiment of the invention. In this case, a grid 110 comprises a plurality of modular grid components 113 reversibly locked to one another so as to prevent relative mutual sliding in a vertical direction. Each modular grid component comprises a body 115, reversible locking members defined by tabs 117 and locking seats 118 defined in a side wall 115a of the body 115. Substantially as already described, the tabs 117 are movable, in particular rotatable, between respective locking positions, in which the tabs 117 engage corresponding locking seats 118 of adjacent modular grid components 113, preventing relative sliding, and respective retracted positions, in which the tabs 117 are retracted from the respective locking seats 118 and are arranged entirely inside the body 115, or in any case so as not to interfere with the relative axial sliding with respect to the adjacent modular grid components 113. Slots 125, facing respective locking seats 118 of adjacent modular grid components 113, allow locking ends 117a of the tabs 117 to reach the respective locking seats 118 through the side wall 115a of the body 115.

In the embodiment of figures 8 and 9, the tabs 117 are operated simultaneously. In detail, the tabs 117 have respective toothed actuation ends 117b opposite the locking ends 117a and each modular grid component 113 comprises a ring gear 122, which engages with the toothed actuation ends 117b of the tabs 117. In each modular grid component 113, the body 115 comprises a shaft 115c of the body 115 coaxial with the respective fuel element 8 and the ring gear 122 is rotatably fitted on the shaft 115c to rotate the respective tabs 117 between the locking position and the retracted position.

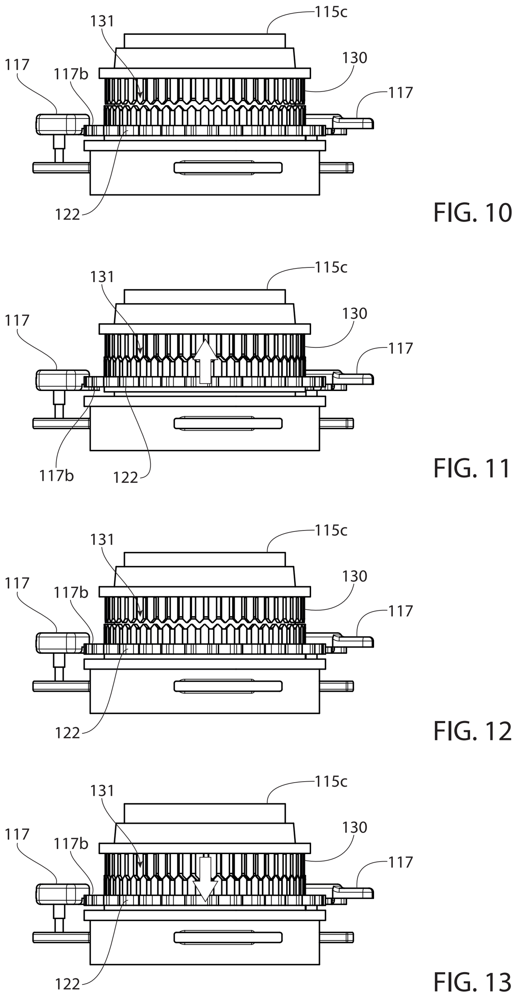

Each modular grid component 113 further comprises a safety device configured to allow the rotation of the ring gear 122 about the shaft 115c in a manoeuvring configuration and to prevent the rotation of the ring gear 122 about the shaft 115c in a safety configuration. The safety device comprises a safety ring 130 fitted on the shaft 115c in an axially and angularly fixed manner and cooperating with an axial margin 122a of the ring gear 122 to form a releasable front coupling 131. In detail, the ring gear 122 is axially slidable along the shaft 115 between a manoeuvring position (figure 10), in which the front coupling 131 is released and the ring gear 122 is free to rotate, and a safety position (figure 11), in which the ring gear 122 is coupled to the safety ring 130 and the front coupling 131 prevents the rotation of the ring gear 122. The ring gear 122 is shaped to engage the toothed actuation ends 117b of the respective tabs 117 both in the manoeuvring position and in the safety position and, in the absence of external forces, is kept coupled to the safety ring 130 by the buoyancy force provided by the cooling fluid CF. A service machine not shown lowers the ring gear 122 against the buoyancy force to operate the tabs 117 and subsequently retracts, allowing the ring gear to couple with the safety ring 130.

Alternatively, for example when the cooling fluid is water or molten salts, whose specific weight is much lower than that of the fuel elements, the ring gear 122 can be axially fixed and angularly movable and the safety ring 130 can be axially movable and angularly fixed, as shown in figure 12 (manoeuvring position) and in figure 13 (safety position). In this case, the safety ring 130 engages the ring gear 122 by falling under gravity and is lifted by a machine to allow the rotation of the ring gear 122 and the operation of the tabs 117.

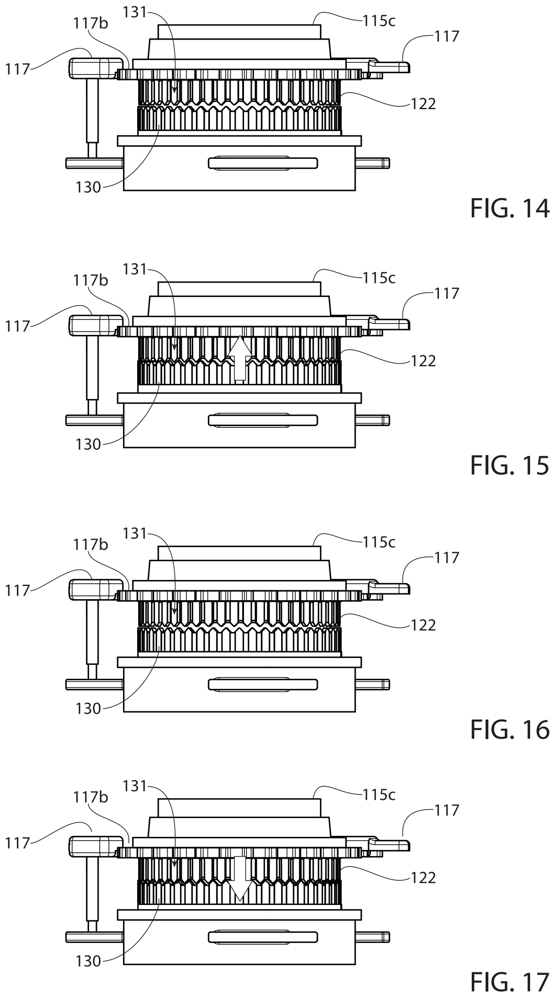

According to further embodiments, shown respectively in figures 14-17, the ring gear 122 can be axially fixed and angularly movable and the ring gear 122 and the safety ring 130 are inverted with respect to the embodiments of figures 8-13, with the safety ring 130 placed under the ring gear 122.

In the embodiment of figure 14 (manoeuvring position) and figure 15 (safety position), the ring gear 122 is axially fixed and angularly movable, while the safety ring 130 is axially movable and angularly fixed. In this case, the safety ring 130 is kept coupled to the ring gear 122 by the buoyancy force provided by the cooling fluid CF, when the cooling fluid CF is a heavy liquid metal.

In the embodiment of figure 16 (manoeuvring position) and figure 17 (safety position), the ring gear 122 is axially and angularly movable, while the safety ring 130 is axially and angularly fixed. In this case, the ring gear 122 engages the safety ring 130 by falling under gravity, when the cooling fluid is water or molten salts, and is lifted and rotated by a machine for operating the tabs 117.

It is finally clear that to the nuclear reactor described and illustrated herein, modifications and variations can be made without thereby departing from the scope of protection of the present invention, as defined in the appended claims.

For example, the shape and type of movement of the locking members may be different from those described and may include, inter alia, sliding pins and tabs instead of rotating ones, or cams or other eccentrics.

## Claims

1. A nuclear reactor comprising:
a vessel (2) internally defining a pool (3);
a cooling fluid (CF) in the pool (3);
a core (6) housed in the vessel (2) and comprising a plurality of fuel elements (8) at least partially immersed in the cooling fluid (CF), wherein each fuel element (8) extends along a respective longitudinal axis (A);
a grid (10; 110), directly or indirectly anchored to the vessel (2) and arranged transversely to the longitudinal axes (A) of the fuel elements (8), so as to axially restrain the fuel elements (8);
wherein the grid (10; 110) comprises a plurality of individually removable modular grid components (13; 113), wherein, in a working position, adjacent modular grid components (13; 113) are reversibly locked to one another so as to prevent relative mutual sliding in a direction parallel to the longitudinal axes (A) of the fuel elements (8) and wherein the modular grid components (13; 113) are shaped so that, when one of the modular grid components (13; 113) is removed from the grid (10; 110), the grid (10; 110) allows the extraction of a corresponding fuel element (8) through a passage left open by the removed modular grid component (13; 113).

2. The nuclear reactor according to claim 1, wherein each modular grid component (13; 113) is axially aligned to the corresponding fuel element (8), so as to counteract a buoyancy and/or drag force provided by the cooling fluid to the corresponding fuel element.

3. A nuclear reactor according to claim 1 or 2, wherein each modular grid component (13; 113) is provided with locking seats (18; 118) and reversible locking members (17; 117) having respective locking positions, in which the locking members (17; 117) engage corresponding locking seats (18; 118) of respective adjacent modular grid components (13; 113), and respective retracted positions, in which the locking members (17; 117) are retracted from the respective locking seats (18; 118).

4. A nuclear reactor according to claim 3, wherein each modular grid component (13; 113) comprises a body (15; 115) having a cylindrical or prismatic side wall (15a; 115a) coaxial with the corresponding fuel element (8), wherein the side wall (15a; 115a) has first slots, defining respective locking seats (18; 118), and second slots (25; 125), and wherein the locking members (17; 117) engage the corresponding locking seats (18; 118) through respective second slots (25; 125) in the respective locking positions.

5. A nuclear reactor according to claim 4, wherein the locking seats (18; 118) of each modular grid component (13; 113) face corresponding second slots (25; 125) of respective adjacent modular grid components (13; 113) and wherein all the modular grid components (13; 113) comprise an equal number of locking members (17; 117) and of locking seats (18; 118) and in each modular grid component (13; 113) the respective locking members (17; 117) are alternated with the respective locking seats (18; 118) along the side wall (15a; 115a) of the body (15; 115).

6. A nuclear reactor according to any one of claims 3 to 5, wherein the locking members (17; 117) comprise tabs movable between the respective locking position, in which the tabs are arranged with respective locking ends (17a; 117a) engaging the respective locking seats (18; 118), and the respective retracted position, in which the locking ends (17a; 117a) are retracted inside the body (15; 115).

7. A nuclear reactor according to any one of claims 3 to 6, wherein each modular grid component (13; 113) comprises actuation members (22; 122) operable to move the locking members (17; 117) between the respective locking position and the respective retracted position.

8. A nuclear reactor according to claim 7, wherein in each modular grid component (13; 113) the actuation members (22) are operable independently of one another.

9. A nuclear reactor according to claim 7 or 8, wherein the body (15) comprises a lid (15d) having a respective through guiding opening for each locking member (17) and the actuation members (22) comprise respective actuation rods engaging respective guiding openings and projecting from the lid (15d).

10. The nuclear reactor according to claim 7, wherein in each modular grid component (113) the respective locking members (117) are simultaneously operable.

11. The nuclear reactor according to claim 10, wherein each modular grid component (113) comprises a shaft (115c) coaxial to the corresponding fuel element (8) and wherein the actuation members (122) comprise respective toothed portions (117b) of the locking members (117) and a ring gear (122), which is rotatably fitted onto the shaft (115c) and engages the toothed portions (117b) of the locking members (117) .

12. The nuclear reactor according to claim 11, wherein each modular grid component (113) comprises a safety device (122a, 130, 131) configured to allow the ring gear (122) to rotate about the shaft (115c) in a manoeuvring configuration and to prevent the ring gear (122) from rotating about the shaft (115c) in a safety configuration.

13. The nuclear reactor according to claim 12, wherein the safety device (122a, 130, 131) comprises a safety ring (130) fitted onto the shaft (115c) in an angularly fixed manner and cooperating with an axial margin (122a) of the ring gear (122) to form a releasable front coupling (131) and wherein one of the ring gear (122) and the safety ring (130) is axially fixed and the other one of the ring gear (122) and the safety ring (130) is axially slidable along the shaft (115c) between a manoeuvring position, in which the front coupling (131) is released and the ring gear (122) is free to rotate, and a safety position, in which the ring gear (122) is coupled to the safety ring (130) and the front coupling (131) prevents the ring gear (122) from rotating.

14. A nuclear reactor according to claim 13, wherein the axially fixed one of the ring gear (122) and the safety ring (130) is arranged above and, in the absence of external forces, the ring gear (122) and the safety ring (130) are kept mutually coupled by the buoyancy provided by the cooling fluid (CF), or wherein the axially fixed one of the ring gear (122) and the safety ring (130) is arranged below and, in the absence of external forces, the ring gear (122) and the safety ring (130) are kept mutually coupled by gravity.

15. The nuclear reactor according to any one of the preceding claims, wherein each fuel element (8) has an active portion (8a), a head (8b) and a stem (8c) connecting the head (8b) to the active portion (8a) and wherein the head (8b) is arranged in axial contrast against the respective modular grid component (13; 113).
